Europäisches Patentamt

**European Patent Office** (11) Publication number: **0 194 116**

Office européen des brevets **B1**

(12) **EUROPEAN PATENT SPECIFICATION**

(45) Date of publication of patent specification: **17.10.90** (51) Int. Cl.⁵: **C 01 B 33/141**

(21) Application number: **86301461.9**

(22) Date of filing: **28.02.86**

(54) Stable dispersions of inorganic particles.

| | |
|---|---|
| (30) Priority: **04.03.85 GB 8505470** | (73) Proprietor: **UNILEVER PLC**<br>**Unilever House Blackfriars P.O. Box 68**<br>**London EC4P 4BQ (GB)** |
| (43) Date of publication of application:<br>**10.09.86 Bulletin 86/37** | ㊨ **GB** |
| | (73) Proprietor: **UNILEVER NV**<br>**Burgemeester s'Jacobplein 1 P.O. Box 760**<br>**NL-3000 DK Rotterdam (NL)** |
| (45) Publication of the grant of the patent:<br>**17.10.90 Bulletin 90/42** | ㊨ **BE CH DE FR IT LI NL SE AT** |
| (84) Designated Contracting States:<br>**AT BE CH DE FR GB IT LI NL SE** | (72) Inventor: **Garvey, Michael Joseph**<br>**The Holies Nigel Road Heswall**<br>**Wirral Merseyside L60 1XU (GB)**<br>Inventor: **Griffiths, Ian Charles**<br>**24 Quarry Avenue Bebington** |
| (56) References cited:<br>**US-A-2 976 250** | **Wirral Merseyside L63 3HS (GB)**<br>Inventor: **Rigarlsford, John Frederick**<br>**1 Heyfield Park Road**<br>**Little Sutton South Wirral L66 5PA (GB)** |
| | (74) Representative: **Thomas, Susan Margaret et al**<br>**UNILEVER PLC Patents Division P.O. Box 68**<br>**Unilever House**<br>**London EC4P 4BQ (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the prevention of compact sediment formation in dispersions of inorganic particles.

Various proposals have hitherto been made for the prevention of compact sediment formation in dispersions of inorganic particles such as aluminosilicates. In United States Specification No. 2 888 354 it has been proposed to stabilise a slurry of a silica sol and a powdered refractory material using nonionic or cationic surface active agents.

This invention is concerned more particularly with the prevention of compact sediment formation in a dispersion of a silica in an essentially aqueous medium having a particle size in the range 1—20 µm.

Silica gels and precipitates having an average particle size (Coulter Counter) in the range from about 1 to 20 µm are commercially available and are generally sold as powders in bags or in bulk containers. For certain applications of these silicas it is desirable to have an aqueous dispersion of the material, but it has been found that such dispersions frequently settle out to form a hard, non-redispersible sediment at the bottom of a container.

It has now been found that by selecting particular surfactants and controlling the pH of the system, a small proportion of cationic surfactant can be used to give a dispersion of silica which forms no hard sediment and is readily redispersible.

For some applications of the dispersions it is desirable to have minimal contamination of the aqueous dispersion by other materials which may react with other components with which the dispersion may ultimately be combined.

Accordingly, the present invention provides a redispersible silica dispersion comprising an aqueous dispersion of silica and a water-soluble cationic surfactant characterized in that the silica has an average particle size in the range 1 to 20 µm, in that the silica content of the dispersion is from 5 to 50% by weight of the dispersion and in that the pH of the dispersion is in the range 3 to 5 and preferably 3.4 to 4.8, the cationic surfactant being selected from mono- and di-alkyl quaternary ammonium bromides and chlorides, sulphonium and phosphonium salts and amines and in an amount from 0.005 to 2.0% and preferably 0.005 to 0.5% by weight of the dispersion, the amount of surfactant being directly related to the silica content of the dispersion.

Preferably the dispersion also contains an effective amount of a preservative to prevent microbial contamination.

Suitable preservatives include formalin (36.6% aqueous formaldehyde solution), 2-bromno 2-nitropropene 1,3-diol (e.g. Bronopol), sulphur dioxide and combinations of the above or other appropriate preservatives.

The level of preservative in the suspension should be maintained at the minimum level necessary to prevent microbial contamination and this will be related to the purity of the components of the dispersion and to its storage conditions. Although higher levels could be added this would normally be superfluous. Such a minimum level for formalin is 0.2% based on the total slurry.

The silica may be a micronised silica gel or a precipitated silica and may contain some residual electrolyte.

Suitable micronised silica gels for use in the preparation of compositions according to this invention are sold under the trade mark "Gasils" by Joseph Crosfield & Sons Limited of Warrington, England, although other silica gels and precipitates in a suitably small particulate form may be employed.

The cationic surfactants are preferably $C_{12-18}$ mono-alkyl quaternary ammonium bromides and chlorides, such as cetyl trimethyl ammonium bromide, dodecyl trimethyl ammonium bromide, cetyl pyridinium chloride, Arquad 16 (hexadecyl trimethyl ammonium chloride).

The amount of cationic surfactant employed should be directly related to the silica content of the dispersion. That is to say, the higher the silica concentration the higher the percentage of surfactant to be added. However, the benefit obtained in accordance with the present invention is that by adjusting the pH of the suspension the amount of surfactant required to stabilise the dispersion is reduced by a significant amount compared with dispersions at a higher pH.

In addition the present invention provides a process for the preparation of a redispersible silica dispersion comprising treating an aqueous dispersion of a silica having an average particle size in the range 1—20 µm at a pH in the range 3 to 5 with a cationic surfactant in an amount from 0.005 to 0.5% by weight of the dispersion.

The following Experiments illustrate the invention.

### Experiment 1

A 10% w/w dispersion of silica gel (Gasil 35) APS 3.2 µm at pH 6.8 was divided into separate 10 cm³ measuring cylinders and diluted to 5% w/w with cationic surfactant (cetyl trimethyl ammonium bromide) of varying concentrations. The samples were allowed to stand for 23 hours after which time the ease of redispersion, reflected in the sediment volume, was assessed.

| % Concentration of surfactant | S/Sm | Ease of redispersion |
|---|---|---|
| 0 | 0.25 | |
| 0.02 | 0.32 | difficult |
| 0.03 | 0.59 | |
| 0.04 | 0.84 | |
| 0.05 | 0.89 | |
| 0.1 | 0.96 | |
| 0.2 | 0.96 | easy |
| 0.25 | 1.00 | |
| 0.3 | 0.96 | |
| 0.4 | 0.82 | |

Example 1

The above was repeated after first adjusting the pH of the 10% w/w silica dispersion to pH 4.5 with concentrated hydrochloric acid. It was observed, surprisingly, that the level of cationic surfactant necessary to prevent hard sediment was reduced by an order of magnitude.

| % Concentration of surfactant | S/Sm | Ease of redispersion |
|---|---|---|
| 0 | 0.33 | |
| 0.001 | 0.36 | difficult |
| 0.002 | 0.40 | |
| 0.005 | 0.81 | |
| 0.01 | 0.88 | |
| 0.02 | 0.95 | |
| 0.03 | 0.98 | easy |
| 0.05 | 1.00 | |
| 0.1 | 1.00 | |

In the above tables S=sediment volume at the surfactant concentration stated, and Sm=maximum observed sediment volume.

Gasil is a Trade Mark and Gasil 35 is a silica gel having a pore volume of 1.2 ml/g and a BET surface area of 320 m²/g and an average particle size (by Coulter Counter) of 3.2 μm.

Example 2

A series of samples were prepared containing 20% w/w silica (Gasil 200 TP) APS 4.5 μm and varying concentrations of cationic surfactant (Arquad 16). The pH of these dispersions was 4.3.

The samples were allowed to stand for 7 days after which time the ease of redispersion of the sediments was assessed by end over end rotation of the samples until complete redispersion of the sediment occurred or up to a maximum of 50 rotations.

The ease of redispersion was recorded as (% Initial Sediment Volume–% Residual Sediment Volume/Number of Rotations). A value greater than about three indicates easy redispersion.

| % Concentration of surfactant | Ease of redispersion | |
|---|---|---|
| 0 | 0.0 | Difficult |
| 0.01 | 10.0 | |
| 0.02 | 13.4 | Easy |
| 0.1 | 13.6 | |
| 0.2 | 14.2 | |

Gasil 200 TP is a silica gel having a pore volume of 0.4 ml/g a BET surface area of 750 m²/g and an average particle size (by Coulter Counter) of 4.5 μm.

Example 3

A 10% w/w dispersion of precipitated silica (Microsil GP) was diluted with cationic surfactant (cetyl

3

trimethyl ammonium bromide) and hydrochloric acid to give 10 cm³ dispersions of 5% w/w silica at pH 6.8, 4.8 and 3.2 of varying cationic surfactant concentration.

The samples were allowed to stand in 10 cm³ measuring cylinders for 3 days then the ease of redispersion of the sediments assessed by end over end rotating as described in Example 2.

| % Concentration of surfactant | Ease of redispersion pH 6.8 | pH 4.8 | pH 3.2 |
|---|---|---|---|
| 0 | 0 | 0 | 0 |
| 0.01 | 0 | 7.8 | 12.0 |
| 0.02 | 10.0 | 7.0 | 12.7 |
| 0.05 | 6.1 | 12.0 | 14.3 |

Example 4

1 Kg samples of 21% w/w Gasil 200 TP in deionised water were prepared at cetyl trimethyl ammonium bromide concentrations of 0, 0.1 and 1.2% w/w, based on silica (i.e. 0, 0.02 and 0.25% based on the total slurry). The pH of the slurries were 3.5±0.1.

The suspensions were allowed to stand, undisturbed, in 1 litre measuring cylindres, at room temperature for successive periods of 3, 52 and 206 days. After each period, the sediment volume and ease of redispersion of the total sediment, by end over end rotation, were measured. The air space above the slurry, necessary for assisting redispersion, was 275±25 cm³.

The results below show there to be no deterioration in performance over the period of storage. While compact sediment formation, on a 1 kg scale, was prevented at a cationic level of 0.1% based on silica, a further improvement in ease of redispersion can be achieved at higher, 1.2%, cationic levels.

| | 3 Days | | | 52 Days | | | 206 Days | | |
|---|---|---|---|---|---|---|---|---|---|
| CTAB | 0% | 0.1% | 1.2% | 0% | 0.1% | 1.2% | 0% | 0.1% | 1.2% |
| Sediment volume cm³ | 510 | 550 | 570 | 460 | 540 | 563 | 425 | 524 | 565 |
| Turns to redisperse | — | — | — | 118 | 49 | 14 | 125 | 18 | 11 |

Example 5

Several one tonne batches of Gasil 200 TP slurry containing 25% w/w 200 TP silica, 0.025% w/w Arquad 16, 0.2 w/w formalin, and having a final pH in the range 3 to 4.5 were prepared by direct addition to one tonne tote bins with continuous stirring during mixing. While the slurries rapidly separated to an approximate 60% sediment/40% water the sediment was soft, that is no hard compact sediment, permitting ready redispersion on subsequent stirring after standing for periods of up to one month. The slurries were in addition free from microbial contamination.

Example 6

Slurries containing 25% w/w Gasil 200 TP in water at 0% and 0.02% cetyl trimethyl ammonium bromide (CTAB), based on the total weight of slurry were prepared in 100 cm³ measuring cylinders, in the absence and presence of preservatives as shown below. The pH of the slurries was 3.6, except in the presence of salicylic acid where a drop in pH to 2.6 necessitated the addition of sodium hydroxide to readjust to pH 3.6. The samples were allowed to stand for 4 days, recording the percentage sediment volume and ease of redispersion by end over end rotation.

The results shown in Table 1 show there to be no modification to sediment behaviour in the presence of 0.2% formalin and 0.01% Bronopol. In the presence of salicylic acid, however, compact sedimentation in the absence of CTAB is much more severe, the addition of CTAB therefore giving a greater comparative improvement in redispersibility of the sediment.

TABLE 1

| % w/w CTAB | % Sediment volume after 4 days (turns to redisperse) No preservative | 0.2% Formalin | 0.01% Bronopol | 0.2% Salicylic acid |
|---|---|---|---|---|
| 0 | 60 (60) | 57 (90) | 59 (73) | 47 (>100) |
| 0.02 | 69 (14) | 70 (4) | 70 (35) | 73 (33) |

**Claims**

1. A redispersible silica dispersion comprising an aqueous dispersion of silica and water-soluble cationic surfactant characterised in that the silica has an average particle size in the range 1 to 20 µm, in that the silica content of the dispersion is from 5 to 50% by weight of the dispersion and in that the pH of the dispersion is in the range 3 to 5, the cationic surfactant being selected from mono- and di-alkyl quaternary ammonium bromides and chlorides, sulphonium and phosphonium salts and amines and in an amount from 0.005 to 2.0% by weight of the dispersion, the amount of surfactant being directly related to the silica content of the dispersion.

2. A redispersible silica dispersion as claimed in claim 1 characterised in that the pH is in the range 3.4 to 4.8.

3. A redispersible silica dispersion as claimed in claim 1 or 2 in which the weight of cationic surfactant is in the range 0.005 to 0.5% by weight of the dispersion.

4. A redispersible silica dispersion as claimed in any one of the preceding claims containing an amount of a preservative effective to maintain the dispersion in a condition free from microbial contamination.

5. A dispersion as claimed in claim 4 in which the preservative is formalin.

6. A process for the preparation of a redispersible silica dispersion comprising treating an aqueous dispersion of a silica having an average particle size in the range 1—20 µm at a pH in the range 3 to 5 with a cationic surfactant in an amount from 0.005 to 0.5% by weight of the dispersion and optionally adding to the dispersion an amount of preservative effective to maintain the redispersible dispersion free from microbial contamination.

**Patentansprüche**

1. Redispergierbare Siliziumdioxid-Dispersion, die eine wässrige Dispersion von Siliziumdioxid und ein wasserlösliches, kationisches oberflächenaktives Mittel umfaßt, dadurch gekennzeichnet, daß das Siliziumdioxid eine durchschnittliche Teilchengröße im Bereich von 1 bis 20 µm besitzt, der Siliziumdioxid-Gehalt der Dispersion 5 bis 50%, bezogen auf das Gewicht der Dispersion, beträgt, und der pH-Wert der Dispersion im Bereich von 3 bis 5 liegt, wobei das kationische oberflächenaktive Mittel ausgewählt wird aus Mono- und Dialkyl-quaternären-ammoniumbromiden und -chloriden, Sulfonium- und Phosphoniumsalzen und -aminen und in einer Menge von 0,005 bis 2,0%, bezogen auf das Gewicht der Dispersion, anwesend ist, wobei die Menge an oberflächenaktivem Mittel in unmittelbarer Beziehung zum Siliziumdioxid-Gehalt der Dispersion steht.

2. Redispergierbare Siliziumdioxid-Dispersion nach Anspruch 1, dadurch gekennzeichnet, daß der pH-Wert im Bereich von 3,4 bis 4,8 liegt.

3. Redispergierbare Siliziumdioxid-Dispersion nach Anspruch 1 oder 2, dadurch gekennzeichnet, daß das Gewicht des kationischen oberflächenaktiven Mittels im Bereich von 0,005 bis 0,5%, bezogen auf das Gewicht der Dispersion, liegt.

4. Redispergierbare Siliziumdioxid-Dispersion nach einem der vorhergehenden Ansprüche, dadurch gekennzeichnet, daß sie eine wirksame Menge eines Konservierungsmittels enthält, um die Dispersion in einem, von mikrobieller Verunreinigung freien Zustand zu halten.

5. Dispersion nach Anspruch 4, dadurch gekennzeichnet, daß das Konservierungsmittel Formalin ist.

6. Verfahren zur Herstellung einer redispergierbaren Siliziumdioxid-Dispersion, umfassend eine Behandlung einer wässrigen Dispersion eines Siliziumdioxids mit einer durchschnittlichen Teilchengröße im Berech von 1 bis 20 µ bei einem pH-Wert im Bereich von 3 bis 5 mit einem kationischen oberflächenaktiven Mittel in einer Menge von 0,005 bis 0,5% bezogen auf das Gewicht der Dispersion, und gegebenenfalls eine Zugabe einer wirksamen Menge eines Konservierungsmittels zu der Dispersion, um die redispergierbare Dispersion frei von mikrobieller Verunreinigung zu halten.

**Revendications**

1. Dispersion de silice redispersable comprenant une dispersion aqueuse de silice et d'un surfactif cationique hydrosoluble, caractérisée en ce que la silice présente une granulométrie moyenne de 1 à 20 µm, en ce que la teneur en silice dans la dispersion est de 5 à 50% en poids de la dispersion et en ce que le pH de la dispersion est compris entre 3 et 5, le surfactif cationique étant choisi parmi les bromures de mono- et di-alkylammonium quaternaire et les chlorures correspondants, les sels et amines de sulfonium et phosphonium et en une quantité allant de 0,005 à 2,0% en poids de la dispersion, la quantité de surfactif étant en rapport direct avec la teneur en silice de la dispersion.

2. Dispersion de silice redispersable selon la revendication 1, caractérisée en ce que le pH est compris entre 3,4 et 4,8.

3. Dispersion de silice redispersable selon la revendication 1 ou 2, dans laquelle le poids du surfactif cationique est compris entre 0,005 et 0,5% en poids de la dispersion.

4. Dispersion de silice redispersable selon l'une quelconque des revendications précédentes qui contient une quantité de conservateur efficace pour maintenir la dispersion dans un état exempt de contamination microbienne.

5. Dispersion selon la revendication 4, dans laquelle le conservateur est la formaline.

6. Procédé de préparation d'une dispersion de silice redispersable consistant à traiter une dispersion aqueuse d'une silice de granulométrie moyenne de 1 à 20 µm à un pH de 3 à 5 avec un surfactif cationique en une quantité de 0,005 à 0,5% en poids de la dispersion et à ajouter facultativement à la dispersion une quantité de conservateur efficace pour maintenir la dispersion redispersable exempte de contamination microbienne.